(19) Europäisches Patentamt
European Patent Office
Office européen des brevets

(11) **EP 1 458 521 B1**

(12) **EUROPEAN PATENT SPECIFICATION**

(45) Date of publication and mention
of the grant of the patent:
**16.01.2008 Bulletin 2008/03**

(51) Int Cl.:
***B24B 13/06*** *(2006.01)* ***B24B 9/14*** *(2006.01)*

(21) Application number: **02790682.5**

(22) Date of filing: **26.11.2002**

(86) International application number:
**PCT/IL2002/000950**

(87) International publication number:
**WO 2003/045630 (05.06.2003 Gazette 2003/23)**

(54) **METHOD FOR THE MANUFACTURE OF A CLIP-ON FOR EYEGLASSES**

VERFAHREN ZUR HERSTELLUNG VON AUFSTECKBAREN GLÄSERN FÜR BRILLEN

PROCEDE DE FABRICATION D'UN CONTRE-VERRE S'APPLIQUANT SUR UN VERRE OPTIQUE

(84) Designated Contracting States:
**AT BE BG CH CY CZ DE DK EE ES FI FR GB GR IE IT LI LU MC NL PT SE SK TR**

(30) Priority: **26.11.2001 US 991887**

(43) Date of publication of application:
**22.09.2004 Bulletin 2004/39**

(73) Proprietor: **Opti-clip International LLC
Boca Raton, FL 33486 (US)**

(72) Inventors:
• **FELDMAN, Zvi
42823 Zoran (IL)**

• **PELEG, Eyal
42823 Zoran (IL)**

(74) Representative: **Casey, Lindsay Joseph et al
F. R. Kelly & Co.
27 Clyde Road
Ballsbridge
Dublin 4 (IE)**

(56) References cited:
**DE-C- 19 725 159 US-A- 5 428 448
US-A- 5 546 140**

Printed by Jouve, 75001 PARIS (FR)

**Description**

**FIELD OF THE INVENTION**

This present invention relates to accessories for eyeglasses.

**BACKGROUND OF THE INVENTION**

A clip-on is an accessory that is reversibly mountable onto a pair of eyeglasses in order to alter the optical characteristics of the eyeglass lenses. A clip-on consists of two disk-like surfaces referred to herein as "*clip-on surfaces*" that are joined together by a rigid or resilient bridge. The clip-on also includes two or more fasteners positioned at the periphery of the clip-on surfaces that allow the clip-on to be mounted onto a pair of eyeglasses. The fasteners may be, for example, clips or magnets. The manner of mounting a clip-on onto eyeglasses is generally known *per se,* and is described for example, in US patent 5,123,724.

The clip-on surfaces may be, for example, light filters (e.g. tinted glass). In this case, mounting the clip-on onto a pair of eyeglasses allows the eyeglasses to function as sunglasses in addition to the optical properties of the eyeglass lenses. This obviates the need of having a pair of optical sunglasses in addition to the optical eyeglasses. As another example, the clip-on surfaces may be reading lenses in which case mounting the clip-on onto a pair of eyeglasses allows the eyeglasses to function as reading glasses in addition to the optical properties of the eyeglass lenses. This obviates the need of having two separate pairs of eyeglasses for far and near vision.

In order for a clip-on to be aesthetically acceptable, the clip-on surfaces should completely conform to the eyeglasses. That is to say, when the clip-on is mounted on the eyeglasses, the clip-on surfaces should completely conceal the eyeglass lenses and rims surrounding the lenses (where present), but should not extend beyond the outer contour of the lens and/or rims. For this reason, a clip-on is often manufactured together with the eyeglasses

In order to provide a clip-on for a previously manufactured pair of eyeglasses, it is known to mass-produce several models of clip-ons. An individual wishing to obtain a clip-on for his eyeglasses then selects among the mass-produced clip-on models the clip-on having clip-on surfaces most conforming to his eyeglass lens and/or rims. In this case, the clip-on can only be expected to conform approximately to the eyeglasses. The clip-on most conforming to the eyeglasses among all those available may not be completely satisfactory from aesthetic point of view. Moreover, mass-producing clip-ons is only practical for sunglass clip-ons, in which the clip-on surfaces are light filters and not optical lenses that have to be personally suited to the user.

It is also known to custom make a clip-on for an existing pair of eyeglasses by mechanically tracing the outer contour of the rims or (if the width of the rim is constant) removing the lenses and tracing either the outer edge of the lenses or the inner contour of the rims, and cutting clip-on surfaces from clip-on blanks according to the tracings.

The following publications relate to manufacturing clip-ons: US 5,123,724 to Salk; US 5,347,762 to Shibata; US 5,530,652 to Croyle et al.; US 5,546,140 to Underwood; US 5,774,200 to Markey; 5,838,417 to Dahan et al.; 5,910,854 to Varaprasad et al.; 6,087,617 to Troitski et al.; US 6,243,960 to Andrews et al.; US 6,249,991 to Rarick et al.; FR 2763707; US 5,940,538; US 5,974,169; US 5,454,050; US 5,809,179 and US 6,178,264.

**SUMMARY OF THE INVENTION**

According to an aspect of the present invention, there is provided a method as specified in claim 1.

The present invention provides a method and system for manufacturing a clip-on surface for an existing pair of eyeglasses. In accordance with the invention, a contour of at least a portion of the eyeglasses is obtained in an electronic form. Any device for acquiring the at least portion of the contour may be used, such as a mechanical tracer. In a preferred embodiment, the contour is obtained by optically scanning at least a portion of the eyeglasses. A digital image of the scanned portion is produced in an editable form. The image is used to generate a two-dimensional rendition of a contour of at least one clip-on surface. Generating a two-dimensional rendition of a clip-on contour from the digital image of the eyeglasses may involve any one or more of the following actions:

1. Detecting edges in the image, so as to identify a set of edge pixels in the image.
2. Amending the set of edge pixels by deleting from the set of edge pixels, pixels that are not part of the contour of the eyeglass lenses and/or rims so as to produce the set of edge pixels that are on the outer contour of the eyeglass lens and/or rim.
3. Amending the set of edge pixels by introducing additional pixels to the set of edge pixels so as to complete the contour of the eyeglass lens and/or rim.
4. Defining a closed continuous curve based upon the amended set of edge pixels that is a two-dimensional rendition of a contour of a clip-on surface.

5. Indicating in the two-dimensional rendition of the clip-on contour the locations where holes are to be drilled for the attachment of hardware.

6. Altering the two-dimensional rendition of the clip-on contour, for example, to adapt the clip-on surfaces for the attachment of hardware such as clips or the bridge, and/or to achieve a desired aesthetic effect.

In a preferred embodiment, only one eyeglass lens and/or rim is scanned, and a two-dimensional rendition of the contour of one clip-on is generated from the image. A second two-dimensional rendition of a clip-on contour is then generated that is symmetrical to the first. The bridge of the eyeglasses may also be scanned in order to determine the spacing between the clip-on surfaces.

A corrected clip-on contour, with any indication for holes to be drilled, is then generated from each two-dimensional rendition, as described in detail below. The corrected clip-on contour may be altered, for example, to achieve a desired aesthetic effect, or to adapt the clip-on surfaces for the attachment of hardware such as clips or the bridge. The locations where holes are to be drilled for the attachment of hardware may be indicated in the corrected clip-on contour, if this was not done in the two-dimensional rendition.

For cutting the clip-on surfaces from a clip-on surface blank a milling machine is used. Data indicative of the three-dimensional clip-on contours are input to the milling machine that cuts the surface from the blank so as to produce clip-on surfaces having the input three-dimensional contour. The milling machine may also drill any holes in the surfaces as indicated in the clip-on contours.

## BRIEF DESCRIPTION OF THE DRAWINGS

In order to understand the invention and to see how it may be carried out in practice, a preferred embodiment will now be described, by way of non-limiting example only, with reference to the accompanying drawings, in which:

**Fig. 1** shows eyeglasses having rims surrounding the lenses and a clip-on conforming to the eyeglasses;
**Fig. 2** shows eyeglasses having rims partially surrounding the lenses and a clip-on conforming to the eyeglasses;
**Fig. 3** shows rimless eyeglasses and a clip-on conforming to the eyeglasses;
**Fig. 4** shows a system for producing a clip-on;
**Fig. 5** shows an imaging device for imaging eyeglasses;
**Fig. 6** shows a flow-chart for a method for producing a clip-on in accordance with the invention;
**Fig. 7** shows a digital image of a portion of eyeglasses and the edge of the image;
**Fig. 8** shows stages in detecting the outermost contour of the lens and/or rims of eyeglasses;
**Fig. 9** shows stages in the completion of the outermost contour of the lens and/or rims of eyeglasses; and
**Fig. 10** shows modification of clip-on contours.

## DETAILED DESCRIPTION OF THE INVENTION

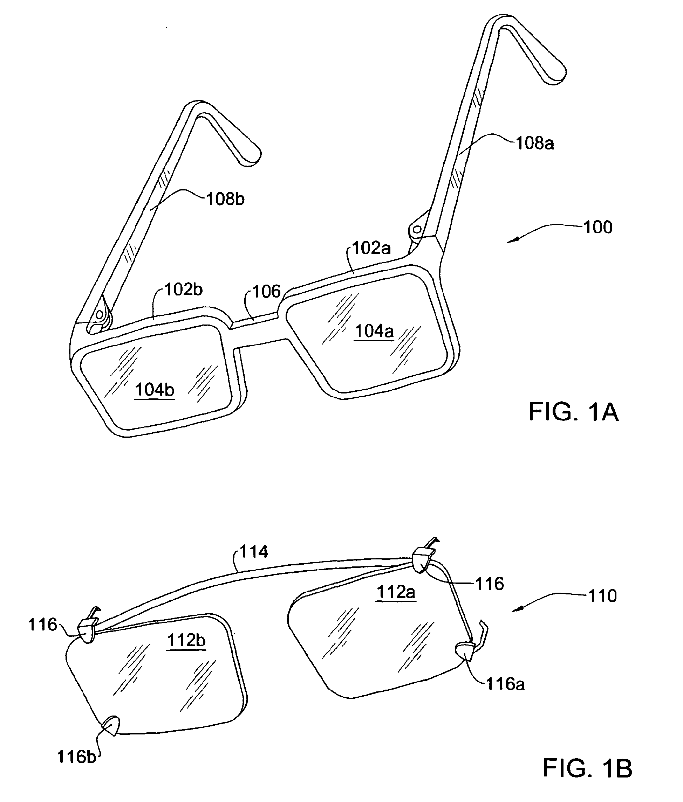

Fig. 1a shows a pair of eyeglasses **100** (referred to herein for simplicity also as eyeglasses) having a frame including left and right rims **102a** and **102b,** respectively. As used herein, the term "*rim*" refers to a portion of an eyeglass frame that rims an eyeglass lens. The left and right rims completely surround left and right lenses **104a** and **104b,** respectively. The frame also includes a nose bridge **106** (referred to herein also as a bridge), and left and right handles **108a** and **108b**, respectively. Fig. 1b shows a clip-on **110** for use with the eyeglasses **100.** The clip-ons **100** include left and right clip-on surfaces **112a** and **112b,** respectively, that are joined by a bridge **114.** The left and right surfaces **112a** and **112b** are shaped to have the same contour as the left and right rims **102a** and **102b,** respectively. Thus, when the clip-on **110** is attached to the eyeglasses **100** by means of clips **116** located around the periphery of the clip-on surfaces **112a** and **112b,** the left and right clip-on surfaces **112a** and **112b** are in complete register with the left and right views **102a** and **102b,** respectively, so that the clip-on surfaces **112a** and **112b** completely conceal the lenses **104a** and **104b,** respectively, and the rims **102a** and **102b,** respectively, but do not extend beyond the perimeter of the rims **102a** and **102b,** respectively.

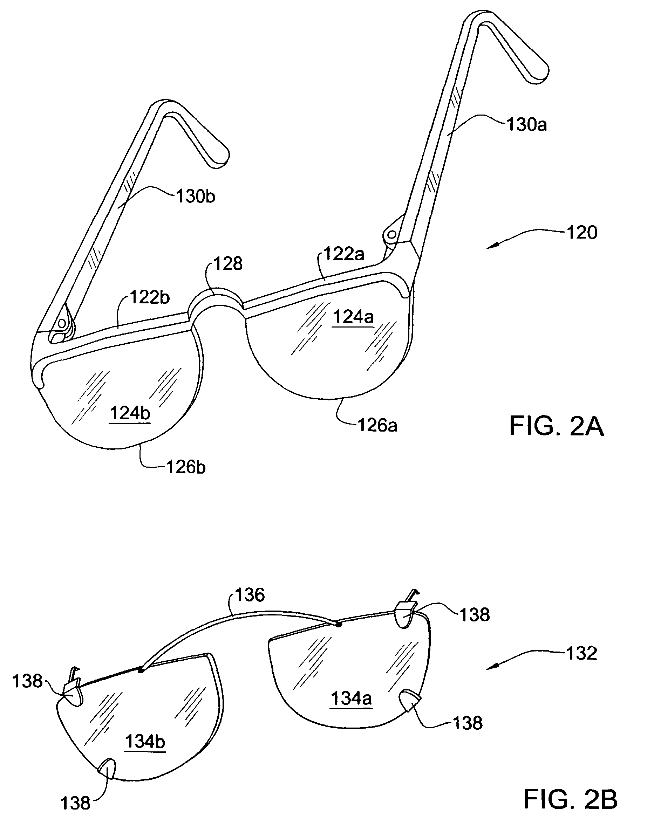

Fig. 2 shows another pair of eyeglasses **120** having a frame including left and right rims **122a** and **122b,** respectively. In the eyeglasses **120,** the left and right rims **122a** and **122b,** respectively, only partially rim left and right lenses **124a** and **124b,** respectively. The left and right lenses **124a** and **124b** thus have an exposed edge **126a** and **126b,** respectively, that is not concealed by the left and right rim **122a** and **122b,** respectively. The frame **120** also includes a bridge **128** and left and right handles **130a** and **130b.**

Fig. 2b shows a clip-on **132** for use with the eyeglasses **120.** The clip-on **132** includes left and right clip-on surfaces **134a** and **134b,** respectively, that are joined by a bridge **136.** The left and right surfaces **134a** and **134b** are shaped to have a contour defined by the left and right rims **122a** and **122b,** respectively, and the exposed edges **126a** and **126b,** respectively of the left and right lenses, **124a** and **124b,** respectively. Thus, when the clip-on **132** is attached to the glasses **120,** by means of clips **138** located on the periphery of the surfaces **134,** the left or right clip-on surfaces is in register with the combination of the left rim **122a** and the left lens **124a** or the right rim **122b** and right lens **124b.**

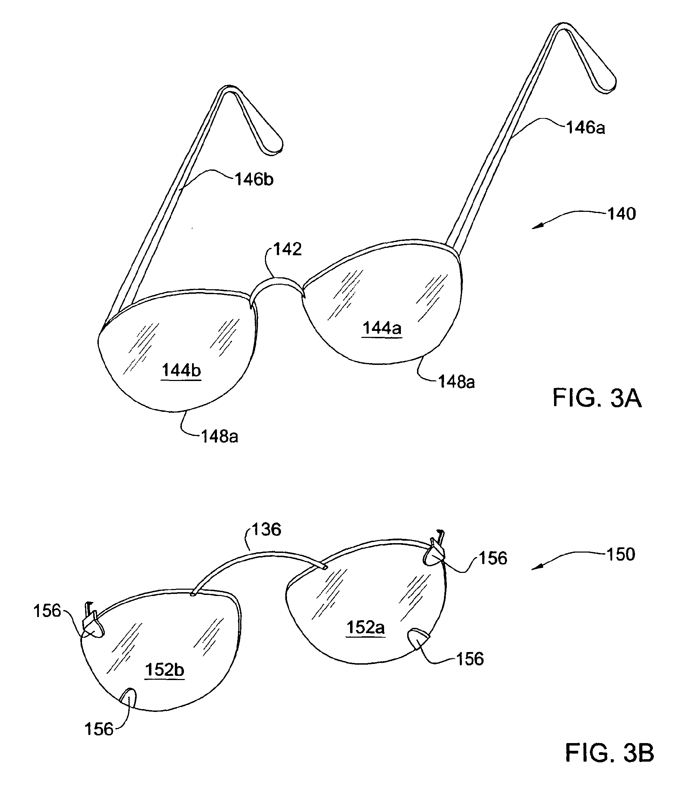

Fig. 3 shows another pair of eyeglasses. The eyeglasses **140** include a frame having a bridge **142** joining left and right lens **144a** and **144b,** respectively, and left and right handles **146a** and **146b.** The frame of the eyeglasses **140** does not include rims around the lenses **144,** so that the entire edge **148a** and **148b** of the left and right lenses **144a** and **144b,** respectively, are exposed.

Fig. 3b shows a pair of clip-ons **150** for use with the eyeglasses **140.** The clip-on **150** includes left and right clip-on surfaces **152a** and **152,** respectively, that are joined by a bridge **154.** The left and right surfaces are shaped to have the same contour as the left and right lenses **148a** and **148b,** respectively. Thus, when the clip-on **150** is attached to the eyeglasses **140,** by means of clips **156** located at the periphery of the clip-on surfaces **122a** and **122b,** the left and right clip-on surfaces **152** and **152b** are in register with the left and right lenses **144a** and **144b.**

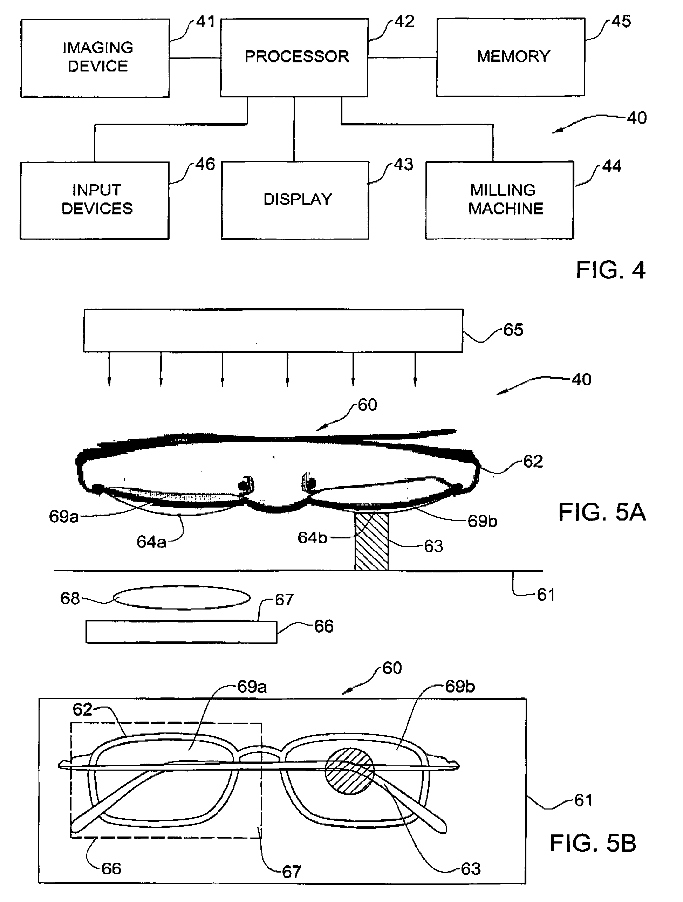

Fig. 4 shows schematically a system **40** for preparing clip-on surfaces that are to be assembled into a clip-on that is to be mountable on an existing pair of eyeglasses.

The system includes an imaging device **41** such as an analog video camera with an analog to digital converter, an optical scanner, or a digital camera. The imaging device is used to scan the eyeglasses so as to generate a two-dimensional digital image of the eyeglasses. In this context, it should be emphasized that eyeglass lenses are three-dimensional structures, being portions of an essentially spherical surface. The imaging device **41** may be, for example, a model *Astra 3450* scanner commercially available from the *Umax* Company, The image is input to a processor **42** where it may be stored in a memory **45** associated with the processor. The image is displayed on a display screen **43** so as to allow a user to use the image to generate on the display screen a two-dimensional rendition of a contour of one or both clip-on surfaces of the clip-on. In this context, it should be emphasized that clip-on surfaces are also three-dimensional structures, being portions of an essentially spherical surface having about the same radius as the eyeglass lenses. Generating the two-dimensional rendition of the clip-on contours may involve using input devices **46** that may be, for example, a keyboard or a computer mouse. The processor **42** may also be configured to generate from the two-dimensional rendition of the clip-on contours the a corrected contour which is preferably true three-dimensional contours, as described in detail below. The generated corrected clip-on contours, and/or the two-dimensional renditions, may also be stored in the memory **45.**

The system **40** preferably includes a milling machine **44** configured to receive from the processor **42** data indicative of the corrected clip-on contours and to shape clip-on surfaces from clip-on surface blanks according to the input data. The term milling machine is used here to refer to any machine for shaping the clip-on surface from the clip-on blank and includes, for example, mechanical cutters and laser cutters. The milling machine may also perform other operations such as drilling holes in the clip-on surfaces or polishing the surfaces. In this context, a milling machine also includes a combination of machines, each of which performs a different operation on clip-on surfaces. An example of a milling machine is described in United States patent specification NO. US-A-7 111 372.

The term *"processor"* is to be construed in a broad manner, including a stand-alone processor, such as a personal computer, network application where one or more remotely located processors are used, or any other suitable processor architecture.

Fig. 5 shows schematically an imaging device **60** that may be used for the imaging device **41** of the system **40.** Fig. 5a shows the imaging device from a side view, while Fig. 5b shows a top view. The imaging device **60** consists of a table **61** that supports eyeglasses holder **63** upon which a pair of eyeglasses **62** is to be placed. The eyeglasses have lenses **69a** and **69b.** The lens **69b** has been attached to support **63,** for example, by a temporary adhesive or magnetic means. The holder **63** holds the eyeglasses **62** parallel to the table **61.** A line or surface CCD array **66** is positioned on the opposite side of the table **61** as a light source **65.** The CCD array **66** defines a two-dimensional planar image surface **67.** The holder **63** is positioned on the table **61** so as to maintain the eyeglasses **62** in a predetermined orientation relative to the planar image surface **67.** An image is projected onto the image surface **67** by means of a lens **68.** Illumination produced by the light source **65** may be visible light or ultraviolet. The illumination may be monochromatic or polychromatic, polarized or non-polarized. The table **61** is formed from materials that are substantially transparent to the illumination produced by the source **65.** In an alternative configuration, (not shown), the holder **63** is attached to a bracket extending from a side of the imaging device **60,** and the table **61** is not present.

Since the eyeglass lenses are three-dimensional objects, being portions of an essentially spherical surface, forming a two-dimensional image of an eyeglass lens involves projecting the imaged portion onto the planar imaging surface **67.** The actual projection can be described by a transformation T that maps the spherical surface of the lens **69** onto the image plane **67.** The transformation T will depend upon the optics of the imaging device **60** (including its focal length $Z_0$), the location and orientation of the eyeglasses as well as the radius R of the eyeglass lenses.

As can be seen in Fig. 5, due to the nearly spherical shape of the lens **69a** and 69b of the glasses **62,** the lenses **69a** and **69b** each have a unique point **64a** and **64b,** respectively of minimal distance from the table **61.** The point **64** is referred to herein as the *"low point"* of the lens.

The imaging device shown in Fig. 5 uses transmitted light to form an initial image on the image surface **67.**

This is by way of example only, and an imaging device using reflected light to form an image may also be used in the system shown in Fig. 5.

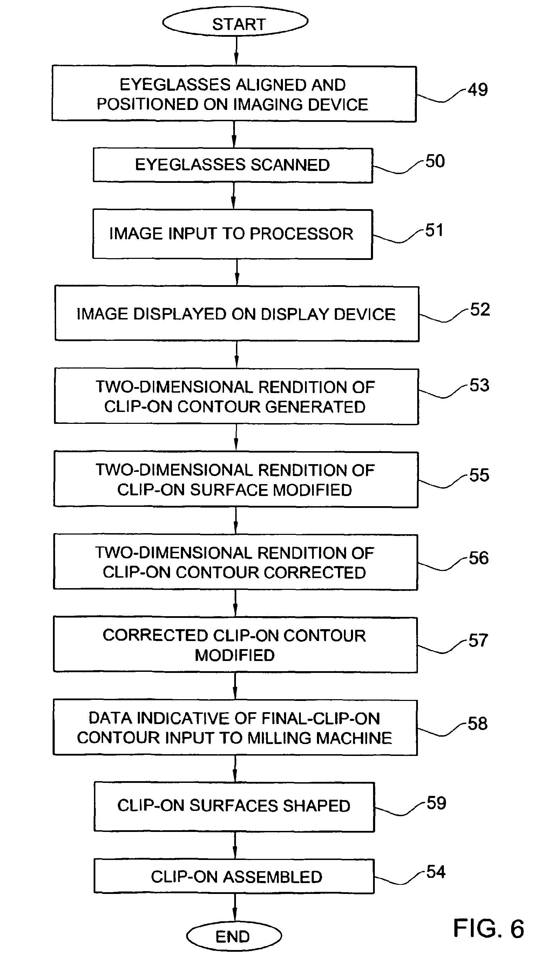

Attention is now drawn to Fig. 6 showing a generalized flowr-chart for a method of generating clip-on surfaces in accordance with one embodiment of the invention. Note that the invention is by no means bound by the operational steps of Fig. 6.

In step **49** the eyeglasses are aligned and positioned on the imaging device as described above in reference to Fig. 5. In the case that parts of the contours of the eyeglasses do not have sufficient contrast, (such as the exposed edges **126** of the lenses **124** in the eyeglasses **120** shown in Fig. 2, or the exposed edges **148** of the lenses **144** in the eyeglasses **140** shown in Fig. 30), the contrast of the contours may be temporarily enhanced by applying a temporary opaque coating to the edges. For example, an erasable marking pen may be used to apply an opaque ink or stain to the edge. The ink or stain is then removed after the eyeglasses have been scanned.

In step **50,** the eyeglasses are scanned by the imaging device **41** so as to generate a digital image of the eyeglasses. The image is input to the processor **42,** (step **51**) and possibly stored in the memory. The image is then displayed on the display device **43** (step **52**). Then in step **53,** the image is used to generate a two-dimensional rendition of a clip-on contour of a clip-on surface that is to be mountable on the scanned eyeglass.

In step **55,** the two-dimensional renditions of the clip-on contours are optionally modified to adapt the clip-on surfaces for the attachment of components (e.g. clips or bridge) that will form part of the assembled clip-on, and/or to achieve a desired aesthetic effect (for example, by the addition of a decoration to the clip-on surfaces).

In order for the clip-on surfaces to conform to the eyeglass lens and/or rims, the contour of the clip-on surfaces must be obtained by a perpendicular projection of the eyeglass lens and /or rims onto a plane. Since the transformation T which the imaging device **41** uses to project the eyeglasses onto the planar imaging surface **67** is, in most cases, not a perpendicular projection, the two dimensional rendition of the clip-on contours produced will deviate from the perpendicular projection of the eyeglass lenses and/or rims. In step **56,** this deviation is corrected. (Correction of this deviation may instead be performed on the image of the eyeglasses obtained in step **50.)**

In step **57,** the corrected clip-on contours are optionally modified to adapt the clip-on surfaces for the attachment of components (e.g. clips or bridge) that will form part of the assembled clip-on, or to achieve a desired aesthetic effect (for example, by the addition of a decoration to the clip-on surfaces).

Data indicative of the final contour after any modifications are then input to the milling machine (step **58)** which shapes clip-on surfaces according to the input contours (step **59).** Milling the clip-on surfaces includes cutting the surfaces from blanks and possibly introducing holes at positions adjacent to the edges of the surfaces for attaching other clip-on parts (clips or bridge) onto the clip-on surfaces, and polishing the surfaces. Finally, in step **54** the clip-on surfaces and other components are assembled into a clip-on.

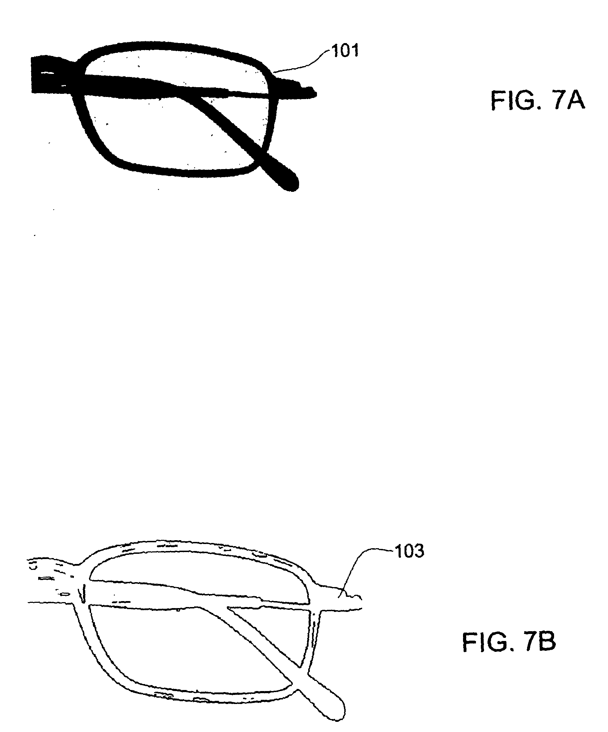

Obtaining a two-dimensiona clip-on contour from the digital image of the eyeglasses (step **53**) will preferably include applying an edge detection algorithm to the image. Fig. 7a shows an image of a portion of eyeglasses as might be obtained in step **52.** The edge detection produces a set of edge pixels that forms an outline of the image as shown in Fig. 7b.

The invention is not bound by any specific manner of edge detection and any edge detection algorithms known *per se* may be employed. Typical examples can be found in:

Canny, John. "A Computational Approach to Edge Detection," IEEE Transactions on Pattern Analysis and Machine Intelligence, 1986. Vol. PAMI-8, No. 6, pp. 679-698.
Lim, Jae S. Two-Dimensional Signal and Image Processing. Englewood Cliffs, NJ: Prentice Hall, 1990. pp. 478-488.
Parker, James R. Algorithms for Image Processing and Computer Vision. New York: John Wiley & Sons, Inc., 1997. pp. 23-29.
After edge detection has been applied, a noise filtering process is preferably applied. A *"noise"* in the image is considered as a group of edge pixels consisting of less than a predetermined number M of pixels.

After noise filtering, pixels that are not outermost edge pixels are deleted from the set of edge pixels. An outer contour detection algorithm may be applied for this, the main steps of which are as follows:

a. Given the set of edge pixels $(X^j, Y^j)$, [j=1,...,Se], the set of edge pixels is divided into n equal segments of length $\Delta X = (\max(X^j) - \text{Min}(X^j))/n$, where $\max(X^j)$ and $\min(X^j)$ are the points with maximal and minimal X value among all outline points. The points that belong to the $k^{th}$ segment are all points having an X value in the range $[X_k - \Delta X/2, X_k + \Delta X/2]$, where $X_k$ is the midpoint of the $k^{th}$ segment.

b. The point with maximal Y value in the kth segment is found and is denoted as $(\underline{X}^k, \underline{Y}^k)$.

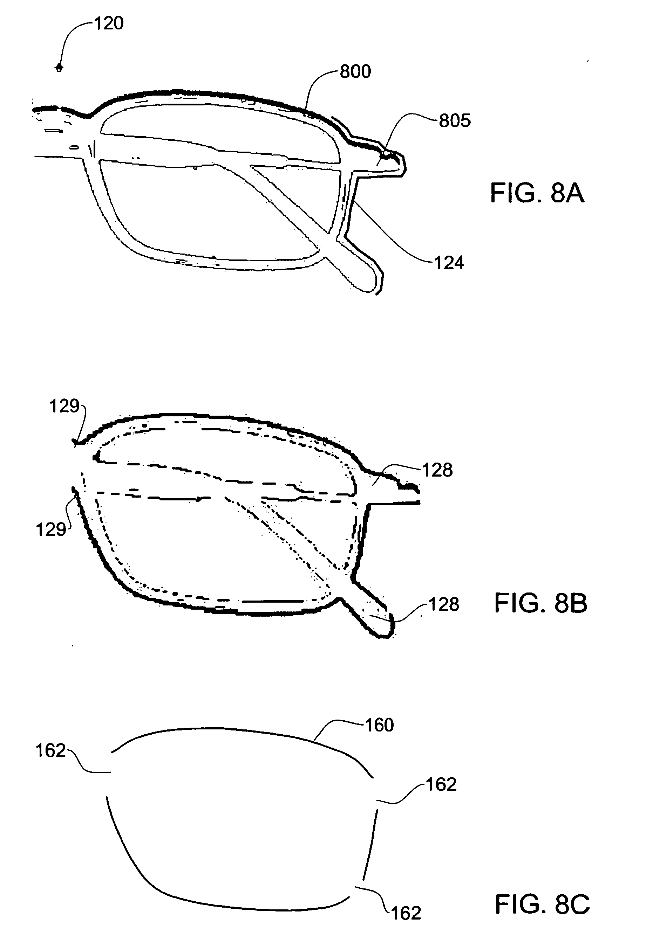

When this outer contour detection algorithm to the set of edge pixels shown in Fig. 7b, the set of points $(\underline{X}^k, \underline{Y}^k)$ that is generated forms the partial outer edge **800** shown in Fig. 8a.

The algorithm must be repeated for at least one other orientation until the entire outer contour has been detected. For example, the set of edge pixels may be divided into segments according to their Y coordinate, instead of their X coordinate, as was done above. This produces the partial outer contour 805 shown in Fig. 8a. It is also preferable to repeat the algorithm for at least one diagonal orientation (for example, at a 45° angle to the X and Y-axes).

A noise reduction process may be applied one or more times during application of the outer contour detection algorithm.

In Fig. 8b, the set of outermost edge pixels 127 has been indicated by a thick line. The remainder of the image is shown in a thin line. Parts of the image not belonging to the outermost contour that has been indicated are erased. Then, parts of the outer contour that are not part of the rims and/or lenses of the glasses are also erased. These parts include, for example, portions 128 of the temple bars, and portions 129 of the bridge. Deletion of edge pixels may be performed automatically or manually using the input devices 46. The result is the contour 160 shown in Fig.8c.

The contour 160 shown in Fig. 8c is incomplete, having spaces 162 due to the deletion of portions from the outer contour of the image (e.g. portions 128 and 129 in Fig.8b).

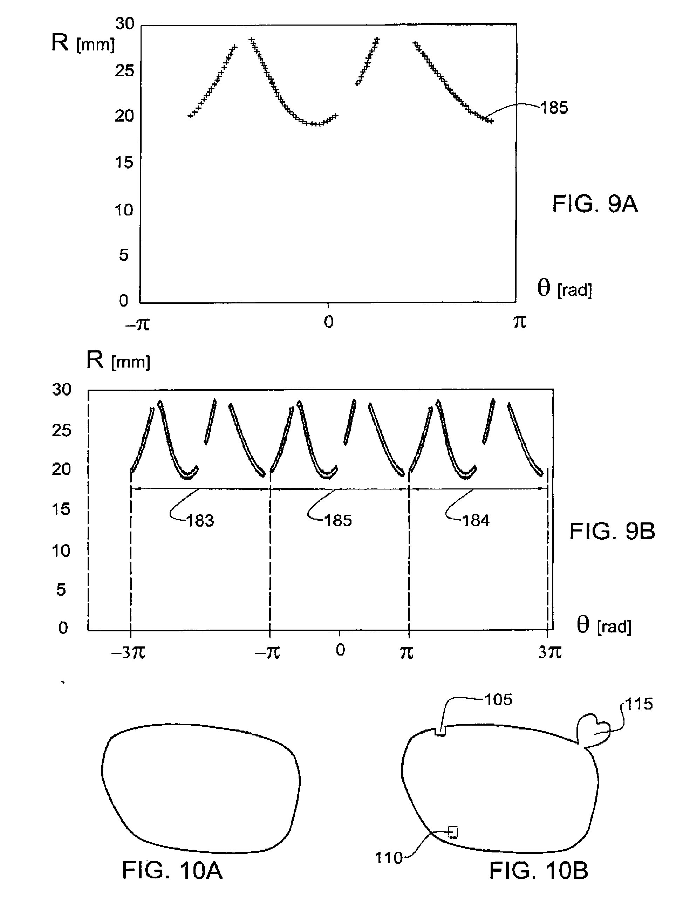

An algorithm is now applied to obtain a two-dimensional rendition of the clip-on contour that is a continuous closed curve and at least piecewise smooth. A typical, yet not exclusive, exemplary algorithm is described below, with reference to Fig.9. The process involves the following steps:

1. A reference point $(X_0, Y_0)$ for the transformation is chosen located in the interior of the contour. This point can be chosen as the mean value of the set $(X^j, Y^j)$ in the outermost contour:

$$X_o = \frac{\sum_1^k X^j}{N} \quad , \quad Y_o = \frac{\sum_1^k Y^j}{N}$$

where the sums are taken over the N outer contour points. Alternatively, the reference point can be chosen as the median value of the set $(X^j, Y^j)$:

$$X_o = \left(\max\left(X^j, j = 1,..,N\right) + \min\left(X^j, j = 1,..,N\right)\right)/2$$

$$Y_o = \left(\max\left(Y^j, j = 1,..,N\right) + \min\left(Y^j, j = 1,..,N\right)\right)/2$$

As yet another alternative, the reference point may be chosen as the low point 64 of the lens (see Fig. 5).

2. Next, the following transformation is performed:

$$\Delta X^j = X^j - X_0$$

$$\Delta Y^j = Y^j - Y_0$$

3. The coordinates of the N outline points $(\Delta X^j, \Delta Y^j)$, obtained as above, are transformed to polar coordinates $(r^j, \theta^j)$ by the transformation:

$$R^j = \sqrt{\Delta X^{j2} + \Delta Y^{j2}}$$

$$\theta^j = \arctan(\Delta Y^j / \Delta X^j)$$

4. The set of N points $(R^j, \theta^j)$ **185** is then sorted in descending (or ascending) order of $\theta$ as shown in Fig. 9A. As shown in Fig. 9b, two sets of points are added to the set of N points $(R^j, \theta^j)$: one is the set of points $(R^j, \theta^j-2\pi)$, i.e., the original set of N points **185** shifted by $-2\pi$ **(183),** and the other is the set of points $(R^j, \theta^j+2\pi)$, i.e., the original set of points **185** shifted by $+2\pi$ **(184).** A continuous curve, such as a spline, is then found that is an approximation of the set of 3m points.

The polar coordinates of the points on the obtained continuous curve are converted to Cartesian coordinates by the transformation:

$$X^i = R^i \cos(\theta^i) + X_o$$

$$Y^i = R^i \sin(\theta^i) + Y_o$$

The continuous curve defined by this series of points $(X^j, Y^j)$, is the two-dimensional rendition of the clip-on contour.

For example, applying the above algorithm to the incomplete outer contour shown in Fig. 8c would result in the two-dimensional rendition of the clip-on contour shown in Fig.10a.

The two-dimensional rendition of the clip-on contour may now be modified to adapt the clip-on surfaces to the attachment of other components (e.g. clips or bridge) and/or to achieve a desired aesthetic effect. Fig. 10a shows a two-dimensional rendition of a clip-on contour **100,** and Fig. 10b shows the same clip-on contour after modifications. The modifications may be a modification designed to adapt the clip-on surfaces for the attachment of components, such as the notch **105** or the indication **110** showing where a hole is to be introduced in the surface. The hole may have any shape. The modifications may be of a decorative nature, such as the decoration **115.** The contour of any of the modifications may have been previously stored in the memory of the processor and incorporated into the clip-on contour where desired using one of the computer input devices. Obviously, decorations may be located along the clip-on contour only where they do not interfere with the attachment of components to the clip-on surfaces. Also, a decoration cannot extend in size beyond the edges of the clip-on blank. The processor is preferably configured to prevent modifications of the two-dimensional rendition of the clip-on contour that extend beyond the edges of the clip-on blank or that would interfere with the attachment of the components.

At any time during the generation of the two-dimensional renditions of the clip-on contours, the two-dimensional renditions may be superimposed on the digital image of the eyeglasses on the display device in order to compare the contours with the eyeglass lenses and/or rims. This is preferably done by using different colors for the contours and the lenses and/or rims.

At this point, it is desirable to correct the two-dimensional rendition of the clip-on contours for deviation, as explained above. This may be done manually. In a preferred embodiment, this is done by projecting the two-dimensional renditions onto a sphere of radius R (where R is the radius of the eyeglass lenses) using the inverse transformation to the transformation T used to generate the image of the eyeglasses. Appling the inverse transform requires knowledge of the radius R. This may be input to the processor by the user using one of the computer input devices, if R is known to him. Alternatively, the system may be configured to determine the radius R, for example, by the scanner obtaining an image of the eyeglass lenses from a perspective including at least three points on a great circle of the lens surface (not shown). The three-dimensional image produced by the inverse transformation is then perpendicularly projected onto a plane.

The corrected clip-on contour may be modified to adapt the clip-on surfaces to the attachment of other components (e.g. clips or bridge) and/or to achieve a desired aesthetic effect, if this was not done previously.

The final clip-on contours may now be translated into machine code appropriate for the milling machine and exported to the milling machine. The milling machine may be under the control of the processor **42** (see Fig. 4), or it may have an independent processor. The machine instructions may include, in addition to the shape of the clip-on surfaces, other instructions, such as instructions relating to orienting the contour on the clip-on blank, or which clip-on blank is to be used.

After shaping the clip-on surfaces and drilling any necessary holes, and possibly polishing, the clip-on surfaces, together with outer components, are assembled into a clip-on.

It will also be understood that the system may be a suitably programmed computer. Likewise, the invention contemplates a computer program product, the computer program being readable by a computer for executing the method of the invention. The invention further contemplates a machine-readable memory tangibly embodying a program of instructions executable by the machine for executing the method of the invention.

**Claims**

1. A method for producing a clip-on (110) for a pair of eyeglasses (100) having lenses and, optionally, rims, the clip-on (110) having at least one clip-on surface (112a, 112b), comprising:

    (a) obtaining in an electronic form a contour of at least a portion of the eyeglasses (100), the contour having at least one discontinuity;
    (b) editing the contour so as to produce a continuous two-dimensional rendition of at least one clip-on contour;
    (c) altering the two-dimensional rendition of the clip-on contour to adapt the clip-on surfaces (112a, 112b) for the attachment of hardware such as clips (138) or a bridge (154);
    (d) using a milling machine (44) to shape at least one clip-on surface (112a, 112b) according to the corrected clip-on contour; and
    (e) assembling one or more clip-on surfaces (112a, 112b) into a clip-on (110).

2. A method as claimed in Claim 1, wherein obtaining in an electronic form a contour of at least a portion of the eyeglasses (100) includes optically scanning at least a portion of the eyeglasses (100).

3. A method as claimed in Claim 1 wherein obtaining in an electronic form a contour of at least a portion of the eyeglasses (100) includes mechanically tracing at least a portion of the eyeglasses (100).

4. A method as claimed in any one of the previous claims wherein editing the contour of at least a portion of the eyeglasses (100) includes one or more of the following:

    (a) detecting edges in the contour, so as to determine a set of edge pixels in the image;
    (b) amending the set of edge pixels by deleting from the set of edge pixels, pixels that are not part of a contour of the eyeglass lenses and/or rims;
    (c) amending the set of edge pixels by introducing additional edge pixels to the set of edge pixels so as to complete the contour of the eyeglass lens and/or rims;
    (d) using the amended set of edge pixels to define a two-dimensional rendition of a contour of at least one clip-on surface (112a, 112b);
    (e) altering the two-dimensional rendition of the clip-on contour; and
    (f) indicating in the two-dimensional rendition of the clip-on contour the locations where holes are to be introduced for the attachment of hardware.

5. A method as claimed in Claim 4 wherein altering the two-dimensional rendition of the clip-on contour includes adding a decoration to the two-dimensional rendition.

6. A method as claimed in any one of the previous claims further comprising generating from a two-dimensional rendition of a clip-on contour, a corrected clip-on contour.

7. A method as claimed in Claim 6, wherein the lenses have a radius R, and producing a digital image of the eyeglasses (100) includes projecting the lenses onto a planar surface by means of a transformation T and wherein generating a three-dimensional clip-on contour from a two-dimensional rendition of a clip-on contour includes projecting the two-dimensional rendition onto a sphere of radius R by means of a transformation that is an inverse transformation of the transformation T.

8. A method as claimed in Claim 7 further comprising projecting the corrected clip-on contour onto a planar surface by means of a perpendicular projection.

9. A method as claimed in any one of the previous claims further comprising attaching fasteners to a clip-on surface.

10. A computer program product comprising computer program code means for performing steps of any of Claims 1 to 9 when said program is run on a computer.

11. A computer readable medium embodying a computer program product as claimed in Claim 10.

**EP 1 458 521 B1**

**Patentansprüche**

1. Verfahren zum Herstellen einer Aufsteckbrille (110) für eine Brille (100), die Linsen und fakultativ Fassungen hat, wobei die Aufsteckbrille (110) wenigstens eine Aufsteckbrillenfläche (112a, 112b) hat, umfassend:

   a) Beschaffen einer Kontur von wenigstens einem Teil der Brille (100) in elektronischer Form, wobei die Kontur wenigstens eine Diskonuität aufweist;
   b) Bearbeiten der Kontur, um eine kontinuierliche zweidimensionale Wiedergabe wenigstens einer Aufsteckbrillenkontur zu produzieren;
   c) Ändern der zweidimensionalen Wiedergabe der Aufsteckbrillenkontur zum Anpassen der Aufsteckbrillenflächen (112a, 112b) zur Anbringung von Kleinteilen wie Klemmen (138) oder einer Brücke (154);
   d) Verwenden einer Fräsmaschine (44) zum Gestalten wenigstens einer Aufsteckbrillenfläche (112a, 112b) gemäß der korrigierten Aufsteckbrillenkontur und
   e) Zusammensetzen von einer oder mehreren Aufsteckbrillenflächen (112a, 112b) zu einer Aufsteckbrille (110).

2. Verfahren nach Anspruch 1, bei dem das Beschaffen einer Kontur von wenigstens einem Teil der Brille (100) in elektronischer Form das optische Scannen von wenigstens einem Teil der Brille (100) beinhaltet.

3. Verfahren nach Anspruch 1, bei dem das Beschaffen einer Kontur von wenigstens einem Teil der Brille (100) in elektronischer Form das mechanische Abtasten von wenigstens einem Teil der Brille (100) beinhaltet.

4. Verfahren nach einem der vorhergehenden Ansprüche, bei dem das Bearbeiten der Kontur von wenigstens einem Teil der Brille (100) wenigstens eines der Folgenden beinhaltet:

   a) Feststellen von Rändern in der Kontur, um einen Satz Randpixel in dem Bild zu ermitteln;
   b) Ändern des Randpixelsatzes durch Löschen von Pixeln, die nicht Teil einer Kontur der Brillenlinsen und/oder -fassungen bilden, aus dem Randpixelsatz;
   c) Ändern des Randpixelsatzes durch Einführen zusätzlicher Randpixel in den Randpixelsatz, um die Kontur der Brillenlinsen und/oder -fassungen zu vervollständigen;
   d) Verwenden des geänderten Randpixelsatzes zum Definieren einer zweidimensionalen Wiedergabe einer Kontur von wenigstens einer Aufsteckbrillenfläche (112a, 112b);
   e) Ändern der zweidimensionalen Wiedergabe der Aufsteckbrillenkontur und
   f) Anzeigen der Stellen in der zweidimensionalen Wiedergabe der Aufsteckbrillenkontur, wo Löcher zum Anbringen von Kleinteilen einzuführen sind.

5. Verfahren nach Anspruch 4, bei dem das Ändern der zweidimensionalen Wiedergabe der Aufsteckbrillenkontur das Hinzufügen einer Verzierung zur zweidimensionalen Wiedergabe beinhaltet.

6. Verfahren nach einem der vorhergehenden Ansprüche, das ferner das Erzeugen einer korrigierten Aufsteckbrillenkontur aus einer zweidimensionalen Wiedergabe einer Aufsteckbrillenkontur umfasst.

7. Verfahren nach Anspruch 6, bei dem die Linsen einen Radius R haben und das Erzeugen eines Digitalbildes der Brille (100) das Projizieren der Linsen auf eine ebene Oberfläche mithilfe einer Transformation T beinhaltet und bei dem das Erzeugen einer dreidimensionalen Aufsteckbrillenkontur aus einer zweidimensionalen Wiedergabe einer Aufsteckbrillenkontur das Projizieren der zweidimensionalen Wiedergabe mithilfe einer Transformation, d.h. einer inversen Transformation der Transformation T, auf eine Kugel mit Radius R beinhaltet.

8. Verfahren nach Anspruch 7, ferner umfassend das Projizieren der korrigierten Aufsteckbrillenkontur auf eine ebene Oberfläche mithilfe einer lotrechten Projektion umfasst.

9. Verfahren nach einem der vorhergehenden Ansprüche, ferner umfassend das Anbringen von Befestigungselementen an einer Aufsteckbrillenfläche.

10. Computerprogrammprodukt, das Computerprogrammcodemittel zum Durchführen von Schritten von einem der Ansprüche 1 bis 9 umfasst, wobei das genannte Programm in einem Computer abgearbeitet wird.

11. Computerlesbares Medium, das ein Computerprogrammprodukt nach Anspruch 10 ausgestaltet.

**Revendications**

1. Un procédé destiné à produire un contre-verre (110) pour une paire de lunettes (100) possédant des verres et facultativement des montures, le contre-verre (110) possédant au moins une surface de contre-verre (112a, 112b), comprenant :

   (a) l'obtention sous une forme électronique d'un contour d'au moins une partie des lunettes (100), le contour possédant au moins une discontinuité,
   (b) l'édition du contour de façon à produire un rendu bidimensionnel continu d'au moins un contour de contre-verre,
   (c) la modification du rendu bidimensionnel du contour de contre-verre de façon à adapter les surfaces de contre-verre (112a, 112b) pour la fixation d'un élément matériel tel que des agrafes (138) ou un pont (154),
   (d) l'utilisation d'une fraiseuse (44) de façon à façonner au moins une surface de contre-verre (112a, 112b) selon le contour de contre-verre corrigé, et
   (e) l'assemblage d'une ou plusieurs surfaces de contre-verre (112a, 112b) en un contre-verre (110).

2. Un procédé selon la Revendication 1, où l'obtention sous une forme électronique d'un contour d'au moins une partie des lunettes (100) comprend un balayage optique d'au moins une partie des lunettes (100).

3. Un procédé selon la Revendication 1 où l'obtention sous une forme électronique d'un contour d'au moins une partie des lunettes (100) comprend un traçage mécanique d'au moins une partie des lunettes (100).

4. Un procédé selon l'une quelconque des Revendications précédentes où l'édition du contour d'au moins une partie des lunettes (100) comprend une ou plusieurs des opérations suivantes :

   (a) la détection de bordures sur le contour, de façon à déterminer un ensemble de pixels de bordure sur l'image,
   (b) la modification de l'ensemble de pixels de bordure par la suppression de l'ensemble de pixels de bordure des pixels qui ne font pas partie d'un contour des verres et/ou des montures des lunettes,
   (c) la modification de l'ensemble de pixels de bordure par l'introduction de pixels de bordure additionnels à l'ensemble de pixels de bordure de façon à compléter le contour des verres et/ou des montures des lunettes,
   (d) l'utilisation de l'ensemble de pixels de bordure modifié de façon à définir un rendu bidimensionnel d'un contour d'au moins une surface de contre-verre (112a, 112b),
   (e) la transformation du rendu bidimensionnel du contour de contre-verre, et
   (f) l'indication dans le rendu bidimensionnel du contour de contre-verre des emplacements où des trous doivent être introduits pour la fixation d'un élément matériel.

5. Un procédé selon la Revendication 4 où la transformation du rendu bidimensionnel du contour de contre-verre comprend l'ajout d'une décoration au rendu bidimensionnel.

6. Un procédé selon l'une quelconque des Revendications précédentes comprenant en outre la génération, à partir d'un rendu bidimensionnel d'un contour de contre-verre, d'un contour de contre-verre corrigé.

7. Un procédé selon la Revendication 6, où les verres ont un rayon R, et où la production d'une image numérique des lunettes (100) comprend le projection des verres sur une surface plane au moyen d'une transformée T et où la génération d'un contour de contre-verre tridimensionnel à partir d'un rendu bidimensionnel d'un contour de contre-verre comprend la projection d'un rendu bidimensionnel sur une sphère de rayon R au moyen d'une transformée qui est une transformée inverse de la transformée T.

8. Un procédé selon la Revendication 7 comprenant en outre la projection du contour de contre-verre corrigé sur une surface plane au moyen d'une projection perpendiculaire.

9. Un procédé selon l'une quelconque des Revendications précédentes comprenant en outre la fixation d'un fermoir à une surface de contre-verre.

10. Un programme informatique comprenant un moyen de code de programme informatique destiné à exécuter les opérations de l'une quelconque des Revendications 1 à 9 lorsque ledit programme est exécuté sur un ordinateur.

11. Un support lisible par ordinateur contenant le programme informatique selon la Revendication 10.

108b

102b 106 102a

104b 104a

**FIG. 1A**

100

108a

114

112b 112a

116 116

116a

116b

110

**FIG. 1B**

FIG. 2A

FIG. 2B

146b

142

146a

140

144a

148a

144b

148a

FIG. 3A

136

156

150

156

152a

156

152b

156

FIG. 3B

FIG. 4

FIG. 5A

FIG. 5B

START

EYEGLASSES ALIGNED AND POSITIONED ON IMAGING DEVICE — 49

EYEGLASSES SCANNED — 50

IMAGE INPUT TO PROCESSOR — 51

IMAGE DISPLAYED ON DISPLAY DEVICE — 52

TWO-DIMENSIONAL RENDITION OF CLIP-ON CONTOUR GENERATED — 53

TWO-DIMENSIONAL RENDITION OF CLIP-ON SURFACE MODIFIED — 55

TWO-DIMENSIONAL RENDITION OF CLIP-ON CONTOUR CORRECTED — 56

CORRECTED CLIP-ON CONTOUR MODIFIED — 57

DATA INDICATIVE OF FINAL-CLIP-ON CONTOUR INPUT TO MILLING MACHINE — 58

CLIP-ON SURFACES SHAPED — 59

CLIP-ON ASSEMBLED — 54

END

FIG. 6

FIG. 7A

FIG. 7B

120

800

805

124

FIG. 8A

129

129

128

128

FIG. 8B

160

162

162

162

FIG. 8C

R [mm]

FIG. 9A

θ [rad]

R [mm]

FIG. 9B

θ [rad]

FIG. 10A

FIG. 10B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5123724 A
- US 5347762 A, Shibata
- US 5530652 A, Croyle
- US 5546140 A, Underwood
- US 5774200 A, Markey
- US 5838417 A, Dahan
- US 5910854 A, Varaprasad
- US 6087617 A, Troitski
- US 6243960 B, Andrews
- US 6249991 B, Rarick
- FR 2763707
- US 5940538 A
- US 5974169 A
- US 5454050 A
- US 5809179 A
- US 6178264 B
- US 7111372 A

**Non-patent literature cited in the description**

- **CANNY, JOHN.** A Computational Approach to Edge Detection. *IEEE Transactions on Pattern Analysis and Machine Intelligence,* 1986, vol. PAMI-8 (6), 679-698
- **LIM, JAE S.** *Two-Dimensional Signal and Image Processing,* 1990, 478-488
- **PARKER, JAMES R.** Algorithms for Image Processing and Computer Vision. John Wiley & Sons, Inc, 1997, 23-29